(19) Europäisches Patentamt
European Patent Office
Office européen des brevets

(11) Publication number: 0 002 049
A1

(12) # EUROPEAN PATENT APPLICATION

(21) Application number: 78101364.4

(22) Date of filing: 14.11.78

(51) Int. Cl.²: C 08 K 5/00

(30) Priority: 21.11.77 US 853599

(43) Date of publication of application: 30.05.79
Bulletin 79/11

(84) Designated Contracting States: BE DE FR GB NL

(71) Applicant: The B.F. GOODRICH Company, Dept. 0015
WHB-6 500 South Main Street, Akron, Ohio 44318 (US)

(72) Inventor: Son, Pyong-Nae, 2106 Ayers Avenue, Akron, Ohio 44313 (US)

(74) Representative: Baillie, Iain Cameron et al, c/o Ladas, Parry, von Gehr. Goldsmith & Deschamps
Blumenstrasse 48, D-8000 München 2 (DE)

(54) **Method for enhancing the resistance to photodegradation of polymeric compositions and compositions thus obtained.**

(57) An ultraviolet light sensitive polymer composition wherein resistance to photodegradation is enhanced by the addition thereto of a mixture containing at least one substituted decahydroquinoline compound and at least one UV absorbing compound selected from the group consisting of benzotriazoles, benzoates and nickel phenolate complexes. This invention is also directed to methods enhancing the resistance of ultraviolet light sensitive polymers to photodegradation.

EP 0 002 049 A1

TITLE MODIFIED
see front page



# POLYMERIC COMPOSITION RESISTANT TO PHOTODEGRADATION

## BACKGROUND OF THE INVENTION

Field of the Invention - This invention is directed to compositions and a method. More specifically, this invention concerns itself with ultraviolet light sensitive polymer compositions have enhanced resistance to photodegradation, and methods for enhancing the resistance of ultraviolet light sensitive polymers to photodegradation.

Description of the Prior Art - Polymers have in the past and continue to provide an attractive substitute for other more traditional types of structural materials (e.g., wood and metals) because of relatively inexpensive materials and fabrication costs. As polymers continue to find new applications in, for example, the fabrication of automotive parts and building materials, they must also become more durable and capable of withstanding prolonged exposure to a variety of degradative forces. Degradation of polymers can be caused by exposure to light, heat, and/or air. Such degradation is usually manifest by either a partial or total loss of structural integrity, changes in light transmission properties, changes in color, loss or reduction in flexibility and/or resiliency, or any combination of the above phenomenon. Those attempting to avoid polymer degradation have generally selected from among three possible approaches: (a) elimination or reduction of the degradative forces; (b) isolation of the sensitive polymer material from the degradative forces; or (c) modification of the polymer composition to enhance its resistance.

to degradative forces. The latter approach is generally preferable since it does not require engineering or structural changes in the polymer product environment.

There are a variety of additives which have been disclosed as suitable for enhancing the resistance of polymers to one or more of the degradative forces discussed hereinabove. These additives (hereinafter referred to as "stabilizers") can be physically combined with or engrafted upon the environmentally sensitive polymer, thereby prolonging its useful life in the hostile degradative environment. Stabilizers are available which can enhance the polymers resistance to more than one of the degradative forces and conversely, a stabilizer which is effective for prevention of, for example, oxidative degradation may have little if any effect upon the polymers resistance to other degradative agents. Thus, it is not uncommon for polymers to contain a variety of stabilizer materials, each being present for the prevention of the particular degradative reaction.

One of the more difficult to control of the degradative forces is irradiation of the polymer by ultraviolet light. The impact of such irradiation will of course vary depending upon the intensity and duration of exposure and thus may manifest itself only after a prolonged interval. The irradiation of polymers with ultraviolet light can often times cause cross-linking of these materials thereby reducing its resiliency and/or impact resistance. Changes in color and opacity are also often affected by prolonged exposure of

the polymer to ultraviolet light. While many materials are known, and commercially available, as stabilizers against ultraviolet light degradation, the degree of protection afforded by such agents is often concentration dependent. The following list of references are illustrative of the types of ultraviolet absorbers commonly used in conjunction with polymeric materials sensitive to photodegradation: U.S. Patent Nos. 3,362,929; 3,362,930; 3,829,292; 3,901,849; 3,910,918; 3,939,164; published patent application numbers B402,162 and B571,638; UK patent 999,806; and an article appearing in J. Am. Chem. Soc., Vol. 60: 1458 et seq. (1938). In addition, commonly assigned U.S. patent applications Serial No. 697,345 and 697,387 (both filed on June 18, 1976) disclose compounds which are highly effective as ultraviolet light stabilizers for polymeric materials. The compounds disclosed in the above-referenced pending patent applications are substituted decahydroquinolines. Such compounds are highly effective in enhancing the resistance of polyolefins to photodegradation by ultraviolet light.

As will be readily appreciated, the addition of substantial amounts (in excess of 10 weight percent) of stabilizer materials to a polymer can often modify its intrinsic physical, chemical and/or electrical properties or the intrinsic properties of articles prepared therefrom. Thus, there is a continuing need for highly efficient ultraviolet light stabilizer compounds and compositions which are protective of polymers at low concentrations.

## SUMMARY OF THE INVENTION

Accordingly, it is the object of this invention to remedy the above as well as related deficiencies in the prior art.

More specifically, it is the principal object of this invention to provide a polymer composition having enhanced resistance to photodegradation from light within the ultraviolet region of the electromagnetic spectrum.

Another object of this invention is to provide a polymer composition having enhanced resistance to ultraviolet light degradation, yet containing low concentrations of stabilizer compounds.

Still yet an additional object of this invention is to provide a method for enhancement of the resistance of ultraviolet light sensitive polymers to photodegradation thereby prolonging their useful life in a degradative environment.

The above and related objects are achieved by providing a composition containing an ultraviolet light sensitive polymer and, in amounts sufficient to enhance the resistance of said polymer to photodegradation, a stabilizer mixture containing at least one substituted decahydroquinoline compound and at least one compound selected from the group consisting of benzotriazoles, benzoates and nickel phenolate complexes.

## DESCRIPTION OF THE INVENTION INCLUDING PREFERRED EMBODIMENTS

The compositions of this invention can be readily

prepared by simply combining a polymer which is sensitive to ultraviolet light degradation and the stabilizer mixture under conditions designed for uniform distribution of said mixture throughout the polymer. Ordinarily, the concentration of stabilizer mixture in the polymer will range from about 0.05 parts by weight stabilizer mixture per one hundred parts by weight ultraviolet light sensitive polymer to about 5 parts by weight stabilizer mixture per one hundred parts by weight ultraviolet light sensitive polymer. The preferred content of stabilizer mixture in the polymer compositions of this invention is typically in the range of from about 0.1 parts by weight stabilizer mixture per one hundred parts ultraviolet light sensitive polymer to about 1 part by weight stabilizer mixture per one hundred parts by weight ultraviolet light sensitive polymer.

Virtually all polymeric materials are sensitive, at least to some degree, to photodegradation by ultraviolet light. The term "photodegradation" is used throughout this disclosure in reference to ultraviolet light sensitive polymers to describe any photo-induced changes in the physical, chemical, and/or electrical properties caused by such irradiation. Such degradative changes can include cross-linking of the polymer, dehydrohalogenation, reduction in chain length, photo-oxidation, etc. Polymers which are especially sensitive to ultraviolet light degradation are materials which contain unsaturation along their respective backbone, vinyl halide polymers, polyolefins, polyacetalde-

hydes, polyurethanes, ABS resins, polystyrene, polyacrylonitrile, polycarbonates, polyacrylates, poly α-substituted acrylates, varnish, phenol-formaldehyde resins, polyepoxides, polyesters, and their respective blends and copolymers. The preferred ultraviolet light sensitive polymers of the composition of this invention are poly-α-mono olefins. Such α-mono olefin monomers used in preparation of the latter polymers include ethylene, propylene, isobutylene, 1-butene, 1-pentene, 1-hexene, 4-methyl-1-pentene, and the like. The stabilizer mixture disclosed herein is especially suitable for use in the retardation of photodegradation of polypropylene.

The stabilizer mixture of this composition can contain one or more of the following decahydroquinoline compounds:

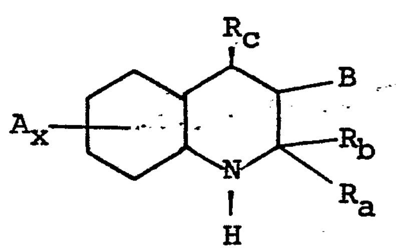

(I)

wherein $R_a$, $R_b$, and $R_c$ each independently are alkyl groups containing 1 to about 12 carbon atoms, a cyclohexyl group, or cyclohexylalkyl groups containing 7 to about 14 carbon atoms; A is selected from the group consisting of alkyl groups containing 1 to about 24 carbon atoms, hydroxyalkyl groups containing 1 to about 18 carbon atoms, alkoxy groups containing 1 to about 12 carbon atoms, ester groups containing a total of from 2 to about 24 carbon atoms in the group,

a cyclohexyl group, cyclohexylalkyl groups containing 7 to about 14 carbon atoms in the group, hydroxy groups, amino groups and aminoalkyl groups and alkyl-substituted amino and aminoalkyl groups wherein the alkyl contains 1 to about 12 carbon atoms; x is 0, 1, 2 or 3; and B is hydrogen, an alkyl group containing 1 to about 12 carbon atoms, a cyclohexyl group, or a cyclohexylalkyl group of 7 to about 14 carbon atoms in the group; and, further, wherein the dimers of the above compounds are essentially two decahydroquinoline compounds of the above structural formula attached to each other at the 4-positions, the 6-positions, the 8-positions, the 4'-6'-positions, and the 4'-, 8-positions on the molecule

- or -

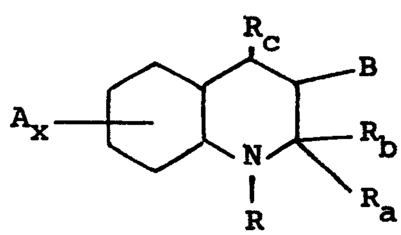

(II)

wherein R is selected from the group consisting of alkyl groups containing 1 to about 24 carbon atoms, aralkyl groups of 7 to about 14 carbon atoms, cyclohexylalkyl groups of 7 to about 14 carbon atoms total, hydroxyalkyl groups containing 1 to about 12 carbon atoms, haloalkyl groups containing 1 to about 12 carbon atoms, cyanoalkyl groups containing 2 to about 12 carbon atoms, aminoalkyl or iminoalkyl groups containing 2 to about 12 carbon atoms, ether groups containing 3 to about 18 carbon atoms total in the group, hydroxyalkylether or cyanoalkylether groups containing 4 to about 18 carbon atoms total in the group, and the group

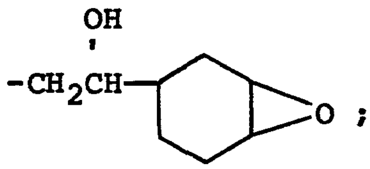

$R_a$, $R_b$, and $R_c$ are each individually alkyl groups containing 1 to about 12 carbon atoms, cyclohexyl groups, or cyclohexylalkyl groups containing 7 to about 14 carbon atoms; A is selected from the group consisting of alkyl groups containing 1 to about 24 carbon atoms, hydroxyalkyl groups containing 1 to about 12 carbon atoms, alkoxy groups containing 1 to about 12 carbon atoms in the group, ester groups containing a total of from 2 to about 24 carbon atoms in the group, a cyclohexyl group, cyclohexylalkyl groups containing 7 to about 14 carbon atoms in the group, hydroxy groups, and amino groups and aminoalkyl groups and alkyl-substituted amino and aminoalkyl groups wherein the alkyl contains 1 to about 12 carbon atoms; x is 0, 1, 2, or 3; and B is hydrogen, an alkyl group containing 1 to about 12 carbon atoms, a cyclohexyl group, or a cyclohexylalkyl group of 7 to about 14 carbon atoms in the group; and, further, wherein the dimers of the above compounds are essentially two decahydroquinoline compounds of the above structural formula attached to each other at the 4-positions, the 6-positions, the 8-positions, the 4'-, 6-positions, and the 4'-,8-positions on the molecules.

The compounds corresponding to formula I can be prepared by a variety of methods disclosed in the open

literature. One especially satisfactory technique for their preparation comprises a two-step process involving: first, the condensation reaction of an aromatic amine, such as aniline, or a ring-substituted aniline with a ketone, or mixtures of ketone, to prepare the dihydroquinoline. This intermediate is then hydrogenated in the presence of a metal catalyst to yield the decahydroquinoline. Literature preparations for the above compound are also disclosed in U.S. Patent Nos. 3,829,292 and 3,910,918; and in J. Am. Chem. Soc., Vol. 60 (1938) at pages 1458 et seq. Dihydroquinoline dimers can also be prepared according to the same general reaction scheme. A process for hydrogenation of the dihydroquinoline to yield the decahydroquinoline is disclosed in U.S. Patent Nos. 2,831,861 and 2,998,468. Compounds corresponding to formula I are the subject of an allowed commonly signed U.S. patent application Serial No. 697,387, filed June 18, 1976 in the names of Robert Wesley Layer and Pyong-Nae Son. This allowed application (now U.S. Patent No. , , ) is hereby incorporated by reference in its entirety.

The compounds corresponding to formula II can also be prepared by a variety of methods disclosed in the open literature. One technique especially preferred for synthesis of such materials involves a three-step process involving: first, the condensation reaction of an aromatic amine such as aniline or a ring-substituted aniline with a ketone or a mixture of ketones to prepare a dihydroquinoline intermediate; second, hydrogenation of the dihydroquinoline in the presence

of a metal catalyst to yield the decahydroquinoline; and thirdly, the displacement of the hydrogen atom on the nitrogen with a hydrocarbon substituent. A process for preparation of dihydroquinoline is disclosed in U.S. Patent Nos. 3,829,292 and 3,910,918; and in J. Am. Chem. Soc., Vol. 60 (1938) at pages 1458 et seq. Dihydroquinoline dimers can be synthesized by an analogous route. A process for hydrogenation of dihydroquinoline to decahydroquinoline is disclosed in U.S. Patent Nos. 2,831,861 and 2,998,468. Compounds corresponding to formula II are the subject of an allowed, commonly assigned U.S. patent application Serial No. 697,345, filed June 18, 1976 in the names of Pyong-Nae Son and Robert Wesley Layer. This allowed application (now U.S. Patent No. , , ) is hereby incorporated by reference in its entirety.

The benzotriazoles which are suitable for use in the stabilizer mixtures of this invention can be represented by the following structural formula

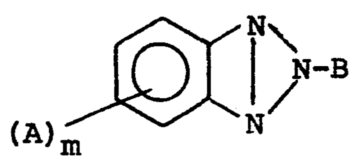

wherein A is halogen, B is phenyl, hydroxyphenyl, lower alkyl substituted phenyl or lower alkyl hydroxy substituted phenyl. Compounds falling within the scope of above formula are commercially available (e.g., Tinuvin 327 [2-(3',5'-di-t-butyl-2'-hydroxyphenyl)-5-chlorobenzotriazole] and Tinuvin 328-[2-(3',5'-di-t-amyl-2'-hydroxyphenyl)-5-benzotriazole] available from Ciba Geigy), or can be prepared by techniques described in the open literature. One such representative

preparation is disclosed in U.S. Patents 3,004,896 and 3,018,269 which are hereby incorporated by reference in their entirety.

The benzoates which are suitable for use in the stabilizer mixtures of this invention can be represented by the following structural formula

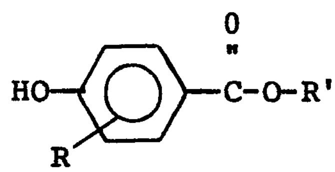

wherein R is lower alkyl of 1-4 carboxy atoms, R' is aryl or alkaryl.

Compounds falling within the scope of the above formula are commercially available (e.g., Ferro AM 340-[2',4'-di-t-butylphenyl 3,5-di-t-butyl-4-hydroxybenzoate]-available from Ferro Corporation), or can be prepared by techniques described in the open literature. One such representative preparation is disclosed in U.S. Patent 3,146,217, which is hereby incorporated by reference in its entirety.

The nickel-phenolate complexes which are suitable for use in the stabilizer mixture of this invention can be represented by the following structural formula

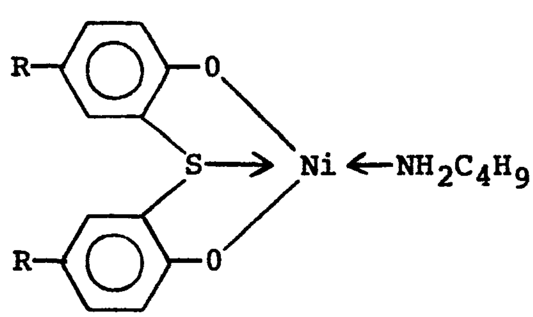

wherein R is lower alkyl of 1-4 carbon atoms.

Compounds falling within the scope of the above formula are commercially available (e.g., Cyasorb UV-1084-[(2,2'-thio-bis 4-t-octyl phenolate])-n-butylamine nickel - available from American Cyanamide Company) or can be prepared by techniques described in the open literature. One such representative preparation is disclosed in U.S. Patent 3,975,358, which is hereby incorporated by reference in its entirety.

The compositions of this invention can contain, in addition to the materials described hereinabove, a variety of optional ingredients. Such ingredients can include metal oxides, such as zinc, calcium and magnesium oxide, fatty acids such as stearic, lauric acid and the metal salts thereof; fillers such as calcium and magnesium carbonate, calcium and barium sulfonates, aluminum silicates, asbestos, and the like; plasticizers and extenders, such as dialkyl and diaryl organic acids, such as diisobutyl, diisooctyl, diisodecyl and dibenzyl oleates, stearates, sebacates, azelates, phthalates, and the like; ASTM Type 2 petroleum oils, paraffinic oils, castor oil, tall oil, glycerine, and the like; antioxidants, such as 2,6-di-t-butyl paracresol, 2,2'-methylene-bis-(4-ethyl-6-t-butyl phenol), 2,2'-thio-bis-(4-methyl-6-t-butyl phenol), 2,2'-methylene-bis-6-t-butyl-4-ethyl phenol, 4,4'-butylidene-bis-6-t-butyl-m-cresol, 2-(4-hydroxy-3,5-di-t-butylanilino-4,6-bis(octylthio)1,3,5-triazine, hexahydro-1,3,5-tris-β-(3,5-di-t-butyl-4-hydroxyphenyl)-propionyl-s-triazine, tris-(3,5-di-t-butyl-4-hydroxybenzyl)-isocyanurate, tetrakismethylene-3(3',5'-di-t-butyl-4'-hydroxyphenyl)propionate methane, distearylthiodipropionate, dilaurylthiodipropionate, tri(nonylphenyl) phosphite, tinthioglycolate, and the like; and other ingredients such as pigments, tackifiers, flame retardants, fungicides, and the like.

Optional compounding ingredients which are especially preferred for use in combination with above stabilizer mixtures are the antioxidants. The inclusion within the polymer composition of an antioxidant, in addition to the UV stabilizer mixture, confers upon the polymer composition stability against two of the more environmentally hostile degradative forces. The antioxidant can be present within the polymer composition within the range of from about 0.1 to about 10 parts by weight per 100 parts by weight polymer, and preferably from about 0.2 to about 5 parts by weight per 100 parts by weight of polymer. Generally, the phenolic antioxidants are preferred for use in conjunction with the UV stabilizer mixtures of this invention.

The combination of the UV stabilizer mixture and a phenolic antioxidant is especially suitable for stabilization of polyolefin polymers; especially stabilization against degradation by heat, oxygen and ultraviolet light.

Ordinarily, the polymer is compounded with the various types of stabilizer materials in accord with standard mixing techniques and equipment; such as in a

Banbury mixer, a Henschel mixer, a rubber mill, an extruder mixer or equivalent device. The various components of the composition may be physically intimately blended either in the absence of or in the presence of a common solvent; or in a solvent which is capable of dissolving the polymer component of the composition yet substantially incapable of dissolving the stabilizer ingredients. Typical of such solvent/ dispersing agents include hexane or benzene. Subsequent to intimately dispersing the various components of the composition within one another, the dispersing agent (if any) can be removed by selective evaporation and the resultant resin recovered. The resin may thereafter be formed into useable products by a variety of standard techniques.

The ultraviolet light stability of the compositions of this invention is evaluated by exposing a sample of the composition to a Xenon or carbon arc light in a Weather-Ometer operating at temperatures of about 60°C. Degradation of the sample is monitored periodically by measuring the carbonyl adsorption band at 1720 $cm^{-1}$ using an IR spectrophotometer. The relatively rapid formation of carbonyl sites indicates photodegradation of the sample. This test procedure is an accepted method for evaluation of the accuracy of such UV stabilizers and is fully described in the literature, see "Photodegradation, Photooxidation and Photostabilization of Polymers" by Ranby and Raybeck, John Wiley and Sons, New York City (1975) at page 125 et seq., and is also disclosed in U.S. Patent No. 3,909,493. Photo

degradation of the sample can also be manifest by visual cracking of the sample when heated to about 180°C. Oxidative degradation and thermal stability of the sample can also be verified by monitoring the time required to effect discoloration and/or embrittlement of the sample in an aging oven maintained at 140°C.

EXAMPLES

The Examples which follow further define, describe and illustrate the preparation and evaluation of the composition of this invention. Apparatus and procedures used in the preparation and evaluation of such samples are standard or as hereinbefore described. Parts and percentages appearing in such examples are by weight unless otherwise stipulated.

EXAMPLE I

A series of films were prepared (20 mils thick) from polypropylene (Profax 6501, available from Hercules Inc., Wilmington, Delaware) and (1) Tinuvin 328 (2-[3',5'-di-t-amyl-2'-hydroxyphenyl]benzotriazole), a known UV stabilizer available from Ciba-Geigy; (2) a substituted decahydroquinoline; (3) a mixture of Tinuvin 328 and substituted decahydroquinoline; and (4) devoid of any stabilizing agent. These films were prepared by dissolving approximately 200 grams of polypropylene in 300 mls. of benzene together with the desired stabilizing agent(s). The solvent was thereafter evaporated leaving the resinous material. The resinous material was further processed by

extrusion using a Brabender extruder operated at 450°F. and at 75 rpm.

Films were prepared from the extruded material by placing a measured amount of the composition between parallel aluminum plates which were maintained at 420°F. The plates were then brought together thereby compressing the sample. The duration of the molding cycle is approximately 3 minutes and the amount of pressure applied approximately 20,000 psig. Heating is continued for only 1/3 of the compression cycle. A 4 minute cool-down period is allowed prior to separation of the aluminum plates. The molded sheet thus obtained is in the range of 10 to 20 mils thick. This sheet is stripped from the aluminum plate and cut into strips approximately 1 x 2" and mounted for subsequent testing in an Atlas Model 60-W Weather-Ometer. The Weather-Ometer is operated at 140-150°F. The sample, upon being placed within this device, was subjected to a Xenon light source and the ultraviolet light degradation thereof plotted by monitoring the infrared absorption band of the sample at 1720 $cm^{-1}$ (this band corresponding to carbonyl group formation). A Perkin-Elmer Model 467 IR spectrophotometer was used to monitor carbonyl group formation. In addition to the listed materials of the composition specified hereinabove, all samples contained the antioxidant, Irganox 1010 [(tetrakis-[methylene(3,5-di-t-butyl-4-hydroxyhydrocinnamate)]methane, available from Ciba Geigy]; or GOODRITE® 3125 (a triester of a substituted cinnamic acid and 1,3,5-tris[2-hydroxyethyl]-s-triazine-2,4,6-trione, available from BFGoodrich).

**TABLE OF COMPARATIVE RESULTS**

| Film Sample | Concentration of Stabilizer | Elapsed Time for Sample Degradation |
|---|---|---|
| Polypropylene film | - | 500 hours |
| Polypropylene film containing Tinuvin 328 | 1.0 | 1530 hours |
| Polypropylene film containing 1-(2-hydroxyethyl)2,2,4,tri-methyl decahydroquinoline (HETDQ) | 1.0 | 2330 hours |
| Polypropylene film containing Tinuvin 328 | 0.5 | |
| 1-(2-hydroxyethyl)2,2,4,tri-methyl decahydroquinoline (HETDQ) | 0.5 | 3600 hours |

+All film samples contain, in addition to UV stabilizer(s), the antioxidant Irganox 1010 (0.5 parts/100 parts polypropylene).

As is evident from the above comparative data, the presence of both Tinuvin and the substituted decahydroquinoline in the film sample enhance the resistance of polypropylene to degradation by approximately 60% in excess of the decahydroquinoline stabilized film and approximately 250% above the Tinuvin stabilized film. These results clearly demonstrate that Tinuvin and the substituted decahydroquinolines behave synergistically when used in combination with one another as a stabilization mixture for polypropylene.

EXAMPLE II

The procedures of Example I are repeated, except for the substitution of the following combinations of stabilizers for those of the films of Example I.

| Example # | Concentration of Stabilizer | Polypropylene Film Containing Stabilizer(s) |
|---|---|---|
| II | 0.20 | Goodrite 3125 |
| | 0.20 | Ferro AM 340 |
| III | 0.20 | Goodrite 3125 |
| | 0.20 | 2,4-diethyl-1-(2-hydroxyethyl)-2-methyl decahydroquinoline |
| IV | 0.20 | Goodrite 3125 |
| | 0.10 | Ferro AM 340 |
| | 0.10 | 2,4-diethyl-1-(2-hydroxyethyl)-2-methyl decahydroquinoline |
| V | 0.20 | Irganox 1010 |
| | 0.20 | Tinuvin 328 |
| VI | 0.20 | Irganox |
| | 0.20 | 1-(2-hydroxyethyl)-2,2,4,8-tetramethyl decahydroquinoline |
| VII | 0.20 | Irganox |
| | 0.10 | Tinuvin 328 |
| | 0.10 | 1-(2-hydroxyethyl)-2,2,4,8-tetramethyl decahydroquinoline |
| VIII | 0.20 | Goodrite 3125 |
| | 0.20 | Cyasorb UV-1084 |
| IX | 0.20 | Goodrite 3125 |
| | 0.20 | 1-(2-Hydroxyethyl)-2,2,4,6-tetramethyl decahydroquinoline |

| Example # | Concentration of Stabilizer | Polypropylene Film Containing Stabilizer(s) |
|---|---|---|
| X | 0.20 | Goodrite 3125 |
| | 0.10 | Cyasorb UV-1084 |
| | 0.10 | 1-(2-Hydroxyethyl)-2,2,4,6-tetramethyl decahydroquinoline |
| XI | 0.20 | Irganox 1010 |
| | 0.20 | Copolymer of acrylonitrile and N-(2-methacryloxyethyl)-2,2,4-trimethyldecahydroquinoline |
| XII | 0.20 | Irganox 1010 |
| | 0.10 | Tinuvin 328 |
| | 0.10 | Copolymer of acrylonitrile and N-(2-methacryloxyethyl)-2,2,4-trimethyldecahydroquinoline |
| XIII | 0.20 | Goodrite 3125 |
| | 0.20 | 1-(2-Hydroxyethyl)-2,2,4-trimethyldecahydroquinoline |
| XIV | 0.20 | Goodrite 3125 |
| | 0.10 | Ferro AM 340 |
| | 0.10 | 1-(2-Hydroxyethyl)-2,2,4-trimethyldecahydroquinoline |

In each of the above stabilizer systems, the film containing the substituted decahydroquinoline and the UV stabilizer compound demonstrated greater resistance to UV degradation than the film containing a comparable amount of either substituted decahydroquinoline or UV stabilizer compound.

0002049

## CLAIMS

I CLAIM:

1. A composition comprising an ultraviolet light sensitive polymer and in an amount sufficient to enhance the resistance of said polymer to photodegradation by ultraviolet light, a stabilizer mixture containing at least one substituted decahydroquinoline of the formula

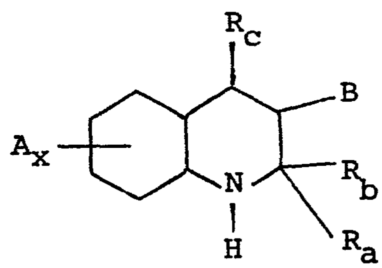

wherein $R_a$, $R_b$, and $R_c$ each independently are alkyl groups containing 1 to about 12 carbon atoms, a cyclohexyl group, or cyclohexylalkyl groups containing 7 to about 14 carbon atoms; A is selected from the group consisting of alkyl groups containing 1 to about 24 carbon atoms, hydroxyalkyl groups containing 1 to about 18 carbon atoms, alkoxy groups containing 1 to about 12 carbon atoms in the group, ester groups containing a total of from 2 to about 24 carbon atoms in the group, a cyclohexyl group, cyclohexylalkyl groups containing 7 to about 14 carbon atoms in the group, hydroxy groups, amino groups and aminoalkyl groups and alkyl-substituted amino and aminoalkyl groups wherein the alkyl contains 1 to about 12 carbon atoms; x is 0, 1, 2, or 3; and B is hydrogen, an alkyl group containing 1 to about 12 carbon atoms, a cyclohexyl group, or a cyclohexylalkyl group of 7 to about 14 carbon

atoms in the group; and, further, wherein the dimers of the above compounds are essentially two decahydroquinoline compounds of the above structural formula attached to each other at the 4-positions, the 6-positions, the 8-positions, the 4'-6-positions, and the 4'-,8-positions on the molecule; and at least one compound selected from the group consisting of benzotriazoles, benzoates and nickel phenolate complexes.

2. A composition comprising an ultraviolet light sensitive polymer and in an amount sufficient to enhance the resistance of said polymer to photodegradation by ultraviolet light, a stabilizer mixture containing at least one substituted decahydroquinoline of the formula

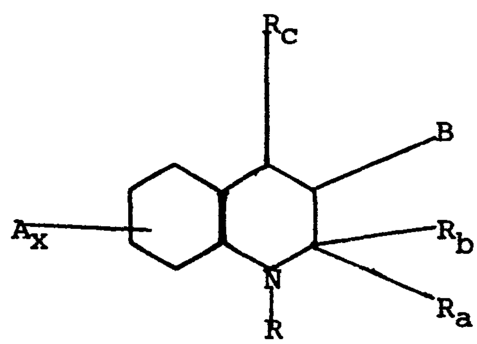

wherein R is selected from the group consisting of alkyl groups containing 1 to about 24 carbon atoms, aralkyl groups of 7 to about 14 carbon atoms, cyclohexylalkyl groups of 7 to about 14 carbon atoms total, hydroxyalkyl groups containing 1 to about 12 carbon atoms, haloalkyl groups containing 1 to about 12 carbon atoms, cyanoalkyl groups containing 2 to about 12 carbon atoms, aminoalkyl groups containing 2 to about 12 carbon atoms,ether groups containing 3 to about 18 carbon atoms total in the group, hydroxy alkylether or cyanoalkylether groups containing 4 to about

18 carbon atoms total in the group, and the group

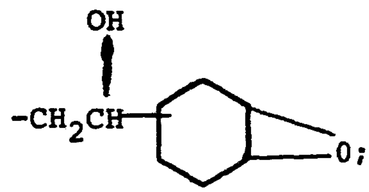

$R_a$, $R_b$, and $R_c$ are each individually alkyl groups containing 1 to about 12 carbon atoms, cyclohexyl groups, or cyclohexylalkyl groups containing 7 to about 14 carbon atoms; A is selected from the group consisting of alkyl groups containing 1 to about 24 carbon atoms, hydroxyalkyl groups containing 1 to about 12 carbon atoms, alkoxy groups containing 1 to about 12 carbon atoms in the group, ester groups containing a total of from 2 to about 24 carbon atoms in the group, a cyclohexyl group, cyclohexylalkyl groups containing 7 to about 14 carbon atoms in the group, hydroxy groups, and amino groups and aminoalkyl groups and alkyl-substituted amino and aminoalkyl groups wherein the alkyl contains 1 to about 12 carbon atoms; x is 0, 1, 2, or 3; and B is hydrogen, an alkyl group containing 1 to about 12 carbon atoms, a cyclohexyl group, or a cyclohexyalkyl group of 7 to a-about 14 carbon atoms in the group; and, further, wherein the dimers of the above compounds are essentially two decahydroquinoline compounds of the above structural formula attached to each other at the 4-positions, the 6-positions, the 8-positions, the 4'-,6-positions, and the 4'-,8-positions on the molecules; and at least one compound selected from the group consisting of benzotriazoles, benzoates and nickel phenolate complexes.

3. A method for extending the useful life or ultra-violet light sensitive polymers by enhancing their resistance to photodegradation, said method comprising:

incorporating within said polymer a UV stabilizer effective amount of a mixture containing at least one substituted decahydroquinoline compound of the formula

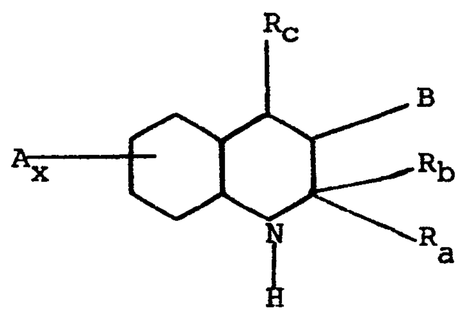

wherein $R_a$, $R_b$ and $R_c$ each independently are alkyl groups containing 1 to about 12 carbon atoms, a cyclohexyl group, or cyclohexylalkyl groups containing 7 to about 14 carbon atoms; A is selected from the group consisting of alkyl groups containing 1 to about 24 carbon atoms, hydroxyalkyl groups containing 1 to about 18 carbon atoms, alkoxy groups containing 1 to about 12 carbon atoms in the group, ester groups containing a total of from 2 to about 24 carbon atoms in the group, a cyclohexyl group, cyclohexylalkyl groups containing 7 to about 14 carbon atoms in the group, hydroxy groups, amino groups and aminoalkyl groups and alkyl-substituted amino and aminoalkyl groups wherein the alkyl contains 1 to about 12 carbon atoms; x is 0, 1, 2, or 3; and B is hydrogen, an alkyl group containing 1 to about 12 carbon atoms, a cyclohexyl group, or a cyclohexylalkyl group of 7 to about 14 carbon atoms in the group; and, further, wherein the dimers of the above compounds are essentially two decahydroquinoline compounds of the above structural formula attached to each other at the 4-positions, the 6-positions, the 8-positions, the 4'-6-positions, and the 4'-,8-positions on the molecule; and at least one compound selected from the group consisting of benzotriazoles, benzoates and nickel phenolate complexes.

4. A method for extending the useful life of ultra-violet light sensitive polymers by enhancing their resistance to photodegradation, said method comprising:

incorporating within said polymer a UV stabilizer effective amount of a mixture containing at least one substituted decahydroquinoline compound of the formula

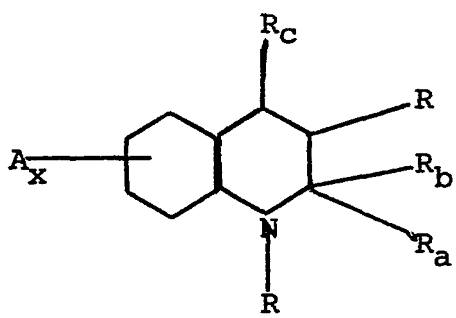

wherein R is selected from the group consisting of alkyl groups containing 1 to about 24 carbon atoms, aralkyl groups of 7 to about 14 carbon atoms, cyclohexylalkyl groups of 7 to about 14 carbon atoms total, hydroxyalkyl groups containg 1 to about 12 carbon atoms, cyanoalkyl groups containing 2 to about 12 carbon atoms, aminoalkyl or iminoalky groups containing 2 to about 12 carbon atoms, ether groups containing 3 to 18 carbon atoms total in the group, hydroxyalkylether or cyanoalkylether groups containing 4 to about 18 carbon atoms total in the group,

and the group

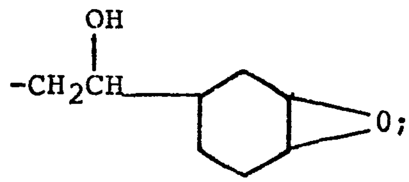

$R_a$, $R_b$, and $R_c$ are each individually alkyl groups containing 1 to about 12 carbon atoms, cyclohexyl groups, or cyclohexylalkyl groups containing 7 to about 14 carbon atoms; A is selected from the group consisting of alkyl groups containing 1 to about 24 carbon atoms, hydroxyalkyl groups containing 1 to about 12 carbon atoms, alkoxy groups containing 1 to about 12 carbon atoms in the group, ester groups containing a total of from 2 to about 24 carbon atoms in the group, a cyclohexyl group, cyclohexyalkyl groups containing 7 to about 14 carbon atoms in the group, hydroxy groups, and amino groups and aminoalkyl groups and alkyl-substituted amino and aminoalkyl groups wherein the alkyl contains 1 to about 12 carbon atoms; x is 0, 1, 2, or 3; and B is hydrogen, an alkyl group containing 1 to about 12 carbon atoms, a cyclohexyl group, or a cyclohexylalkyl group of 7 to about 14 carbon atoms in the group; and, further, wherein the dimers of the above compounds are essentially two decahydroquinoline compounds of the above structural formula attached to each other at the 4-positions, the 6-positions, the 8-positions, the 4'-,6-positions, and the 4'-,8-positions on the molecules; and at least one compound selected from the group consisting of benzotriazoles, benzoates and nickel phenolate complexes.

European Patent Office

# EUROPEAN SEARCH REPORT

0002049

Application number
EP 78 10 1364

## DOCUMENTS CONSIDERED TO BE RELEVANT

| Category | Citation of document with indication, where appropriate, of relevant passages | Relevant to claim |
|---|---|---|
| | GB - A - 764 957 (MONSANTO)<br>* Page 1, lines 32-36,72-85 *<br>-- | 1-4 |
| | FR - A - 2 245 656 (SANKYO)<br>* Page 1, formula I; page 2, lines 11,22; page 6, lines 5-14; page 10, lines 30-38; page 11, lines 9-31 *<br>-- | 1-4 |
| | US - A - 4 035 323 (R.D. MATHIS)<br>* Columns 1,2 *<br>-- | 1-4 |
| A | GB - A - 1 106 949 (GOODRICH)<br>* Pages 1,2; page 3, below *<br>-- | 1-4 |
| PD | FR - A - 2 355 008 (GOODRICH)<br>* Whole patent application *<br>-- | 1-4 |
| PD | FR - A - 2 355 046 (GOODRICH)<br>* Whole patent application *<br>---- | 1-4 |

CLASSIFICATION OF THE APPLICATION (Int. Cl.²)

C 08 K 5/00

TECHNICAL FIELDS SEARCHED (Int.Cl.²)

C 08 K 5/00
5/34
C 07 D 215/06

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 19-02-1979 | COQUELIN |